**Europäisches Patentamt**

**European Patent Office**

**Office européen des brevets**

(19)

(11) Publication number : **0 114 782 B2**

# NEW EUROPEAN PATENT SPECIFICATION

(12)

(45) Date of publication of the new patent specification : **11.11.92 Bulletin 92/46**

(51) Int. Cl.⁵ : **B60B 25/04, B60B 25/22**

(21) Application number : **84630005.1**

(22) Date of filing : **17.01.84**

(54) **Rim assembly and method of constructing same.**

(30) Priority : **17.01.83 US 458240**

(43) Date of publication of application : **01.08.84 Bulletin 84/31**

(45) Publication of the grant of the patent : **16.05.90 Bulletin 90/20**

(45) Mention of the opposition decision : **11.11.92 Bulletin 92/46**

(84) Designated Contracting States : **DE FR GB**

(56) References cited : **DE-B- 1 207 813**

(56) References cited :
**FR-A- 2 293 324**
**GB-A- 754 719**
**US-A- 2 894 556**
**US-A- 3 739 830**
**US-A- 3 743 000**
**US-A- 3 783 927**

(73) Proprietor : **Dotson Wheel Corporation, Inc.**
**Route 2 Box AA**
**Saltville, Virginia 24370 (US)**

(72) Inventor : **Smith, William Thomas**
**1453 Canyon Street**
**Uniontown Ohio 44685 (US)**

(74) Representative : **Stanley, Michael Gordon**
**Michael Stanley & Co. 86 Warwick Road**
**Banbury, OX16 7AJ (GB)**

EP 0 114 782 B2

## Description

This invention relates to a rim assembly for mounting a pneumatic tire thereon, and more specifically to a rim assembly that is unable to form an airtight seal if any part of the lock ring is not in its specified position.

The invention relates in particular to a rim assembly which comprises a rim base, having on one axial side a pair of axially spaced apart annular grooves, a bead seat band slideably mounted on the rim base, and a split lock ring having a specified position in which it is locatable in the axially outermost groove in the rim base and which is engageable with the bead seat band when said lock ring is in said specified position, and the bead seat band when being so engaged makes an airtight contact with a sealing member located in the axially innermost groove in the rim base.

Rim assemblies of this type are disclosed in DE-B-1,207,813, FR-A-2,293,324, and US-A-3,743,000.

When the lock ring is not properly located in the axially outer groove, there is a potential for partial or even full inflation of a tire mounted on the prior art rim assemblies, which could then lead to dangerous situations if the tire suddenly deflates due to loss of the lock ring.

Accordingly there is provided a rim assembly for mounting a pneumatic tire thereon, said rim assembly comprising

(a) a cylindrical rim base having first and second axial ends, a pair of spaced apart annular grooves in an outer circumferential surface of said rim base near said first axial end , and a bead seat on the rim base near said second axial end ;

(b) an annular sealing member , a first portion of said sealing member being located in the annular groove that is furthest away from the first axial end of said rim base and a second portion of said sealing member extending radially outwardly of the radially outer circumferential surface of said rim base;

(c) a split lock ring , said lock ring having a specified position such that a first portion of said lock ring is located in the annular groove that is closest to the first axial end of said rim base, a second portion of said lock ring extending radially outwardly of said rim base and axially outwardly of the annular groove that is closest to the first axial end of said rim base , said second portion having an axially inner surface for engaging a bead seat band and a radially outermost surface that has a predetermined radius and when the lock ring is in said specified position; and

(d) a generally cylindrical bead seat band having first and second axial ends and radially inner and outer surfaces, said bead seat band being coaxial with and slidably mounted about said rim base such that the first axial end of the bead seat band is nearer the first axial end of said rim base, the radially inner surface of said bead seat band comprising:

(i) a first portion that is cylindrical, said first portion having a radius that is slightly larger than the predetermined radius of the radially outermost surface of the second portion of said lock ring , said first portion extending from the first axial end of said bead seat band for a predetermined axial length, said first portion being located radially outwardly of the radially outermost surface of the second portion of said lock ring when said lock ring is in said specified position;

(ii) a second portion extending generally axially and radially inwardly from the axially inner end of said first portion and having a contour that is complementary to the axially inner surface of the second portion of said lock ring when said lock ring is in said specified position;

(iii) a third portion that is inclined generally axially and radially inwardly from the axially inner end of said second portion to a minimum radius, said minimum radius being only slightly larger than the radius of the outer circumferential surface of said rim base , said third portion engaging said sealing member to form an airtight seal when said lock ring is in said specified position; and

(iv) a fourth portion extending axially inwardly from the axially inner end of said third portion , said fourth portion being cylindrical and having said minimum radius;

the axial length of the first portion of the radially inner surface of said bead seat band being of such magnitude that if the first axial end of said bead seat band comes into contact with said lock ring, due to any part of said lock ring not being in said specified position, the third portion of the radially inner surface of said bead seat band will be unable to engage said sealing member and form an airtight seal when a tire is mounted upon said rim assembly and an attempt is made to inflate said tire.

The invention will also relate to a method of determining the axial length of the outwardly extending annular portion of the bead seat band of a rim assembly as claimed in Claims 4 and 5.

Brief description of the drawings

The invention will be better understood by referring to the figures of the drawing, wherein:

Fig. 1 is a radial cross-sectional view of a rim assmebly known in the prior art;

Fig. 2 is an enlarged fragmentary radial cross-sectional view of the prior art rim assembly shown in Fig. 1, wherein the lock ring is not in its specified position;

Fig. 3 is a fragmentary side perspective view of the rim assembly shown in Fig. 2, wherein a portion of the lock ring is not in its specified position;

Fig. 4 is a fragmentary radial cross-sectional view of another prior art rim assembly;

Fig. 5 is a radial cross-sectional view of a rim assembly made in accordance with the present invention;

Fig. 6 is an enlarged fragmentary radial cross-sectional view of the rim assembly shown in Fig. 5, wherein the lock ring is not in its specified position;

Figs. 7 and 8 are fragmentary radial cross-sectional views illustrating a method of determining the dimensions of a rim assembly in accordance with the invention; and

Fig. 9 is a radial cross-sectional view of another rim assembly made in accordance with the invention.

Detailed description of the invention

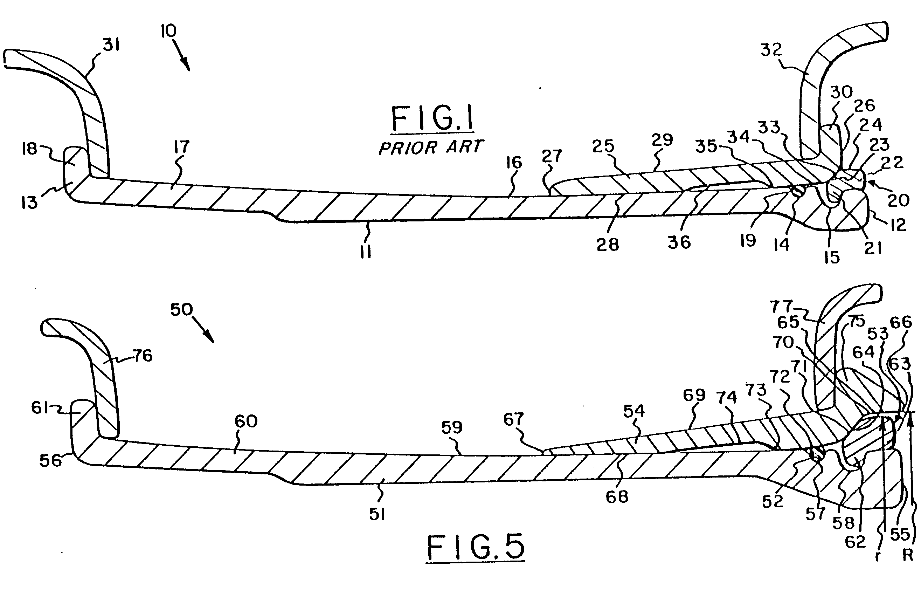

Referring to Fig. 1, there is shown a radial cross-sectional view of a rim assembly 10 made in accordance with the prior art. The prior art rim assembly has a cylindrical rim base 11 with first 12 and second 13 axial ends, and a pair of annular grooves 14, 15 in the outer circumferential surface 16 of the rim base near the first axial end 12. A bead seat 17 extends axially inwardly from the second axial end 13 of the rim base 11, and a flange 18 extends radially outwardly from the second axial end 13 of the rim base. The bead seat may be inclined with respect to the axis of rotation of the assembly.

As used herein and in the appended claims, "axial" and "axially" refer to directions that are parallel to the axis of rotation of a rim assembly, and "radial" and "radially" refer to directions that are perpendicular to the axis of rotation of a rim assembly. As used herein, the centerplane of a rim assembly is a plane that is perpendicular to the axis of rotation of the assembly and is located midway between the axial ends of the rim base of the assembly. As used herein and in the appended claims, "axially inward" refers to a direction going toward the centerplane of a rim assembly and "axially outward" refers to a direction going away from the centerplane of a rim assembly; "radially inward" refers to a direction going toward the axis of rotation of a rim assembly and "radially outward" refers to a direction going away from the axis of rotation of a rim assembly.

A portion of an annular sealing member 19, such as an elastomeric "O" ring, is located in the annular groove 14 that is furthest away from the first axial end 12 of the rim base 11, and a portion of the sealing member extends radially outwardly of the outer circumferential surface 16 of the rim base. A split lock ring 20 has a specified position such that a first portion 21 of the lock ring is located in the annular groove 15 that is closest to the first axial end 12 of the rim base while a second portion 22 of the lock ring extends radially outwardly of the outer circumferential surface 16 of the rim base and axially outwardly of the annular groove 15 that is closest to the first axial end of the rim base. The second portion 22 of the lock ring 20 has an axially inner surface 23 for engaging the bead seat band 25 and a radially outermost surface 24. The radially outermost surface of the second portion of the lock ring has a predetermined radius when the lock ring is in its specified position. A cylindrical bead seat band 25 has first 26 and second 27 axial ends and radially inner 28 and outer 29 surfaces. The bead seat band is coaxial with, and slidably mounted about, the rim base such that the first axial end 26 of the bead seat band is near the first axial end 12 of the rim base. The radially outer surface 29 of the bead seat band is inclined, with respect to the axis of rotation of the assembly, to the same degree as the bead seat 17 of the rim base. A flange 30 extends radially outwardly at the first axial end 26 of the bead seat band. A prior art rim assembly 10 may have separate side-retaining flanges 31, 32 that are placed around the rim base and bead seat band, or the side-retaining flanges may be made integral to the rim base and bead seat band.

The radially inner surface 28 of the bead seat band of a prior art rim assembly has three distinct portions. The first portion 33 extends axially and radially inwardly from the first axial end 26 of the bead seat band and has a contour that is complementary to, and adjacent to the axially inner surface 23 of the second portion of the lock ring. The second portion 34 extends generally radially and axially inwardly from the first portion to a minimum radius that is only slightly larger than the radius of the outer circumferential surface of the rim base, to facilitate the sliding fit of the bead seat band around the rim base. The second portion 34 engages the sealing member 19 to form an airtight seal when a pneumatic tire (not shown) is mounted upon the rim assembly and inflated. The third portion 35 of the radially inner surface of the bead seat band extends axially inwardly from the second portion and is cylindrical, having a radius that is equal to the minimum radius of the second portion. The third portion may have an annular depression 36 therein to reduce the weight of the bead seat band.

Before assembling the components of any rim assembly, the components should be cleaned so that they are free of dirt and loose corrosion. The prior art rim assembly 10 is assembled by slidably interposing the bead seat band between a tire (not shown) and the rim base 11, placing the sealing member 19 in the annular groove 14 that is furthest from the first axial end 12 of the rim base, and then placing the split lock ring 20 in the annular groove 15 that is nearest to the first axial end of the rim base in the specified position that has already been described above. When a pressure-exerting gas, such as compressed air, is introduced into the cavity of the tire through an inflation valve (not shown), the bead seat band is forced axially outwardly until the first portion 33 of the radially inner surface of the bead seat band engages the axially inner surface 23 of the second portion of the lock ring. Simultaneously, the second portion 34 of the radially inner surface of the bead seat band engages the sealing member 19 to form an airtight seal.

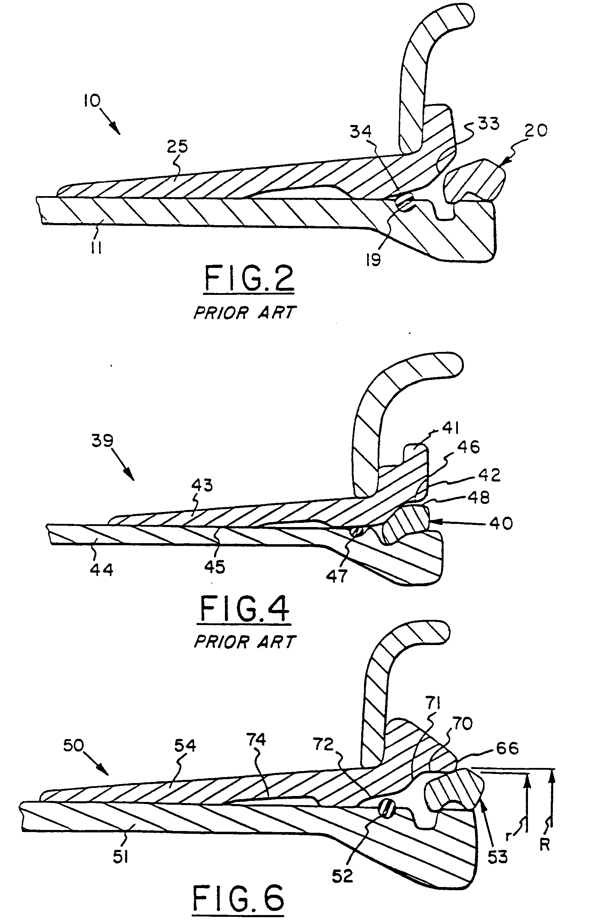

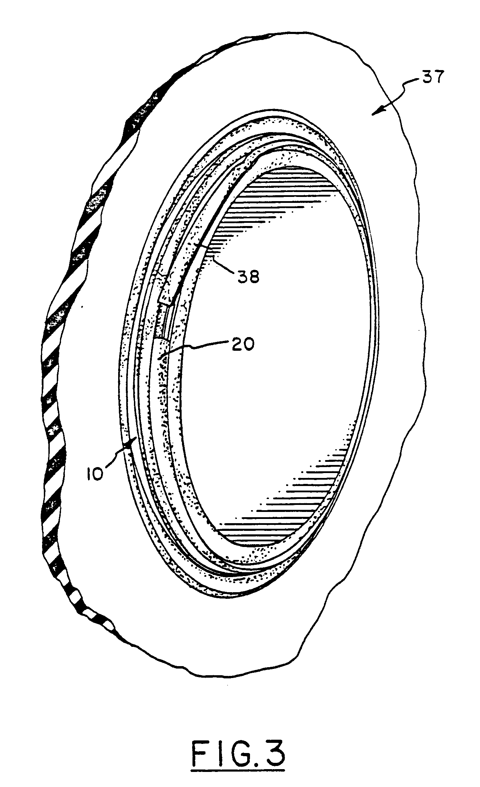

Fig. 2 is an enlarged, fragmentary radial cross-sectional view of the prior art rim assembly 10 illustrated in Fig. 1, wherein the lock ring 20 is not in its specified position. The radial and axial displacement of the lock ring may be more clearly understood by referring to Fig. 3, which is a fragmentary perspective view of the prior art rim 10 with a tire 37 mounted thereon and a portion 38 of the split lock ring 20 displaced from its specified position. It is widely recognized in the rim technology that a damaged lock ring should not be used in assembling a rim assembly and that no attempt should be made to inflate a tire mounted on a rim assembly in which the lock ring has not been placed in its specified position along its entire length. However, a person assembling a rim assembly may negligently fail to heed these widely recognized rules.

Referring again to Fig. 2, it may be observed that even though the bead seat band 25 is not in contact with the lock ring 20 at the location where the lock ring is displaced from its specified position, the second portion 34 of the radially inner surface of the bead seat band is still engaging the sealing member 19 to form an airtight seal. This phenomena occurs because the bead seat band is forced axially outwardly by the inflation pressure in the tire (not shown) until it contacts the lock ring at some point. It the lock ring is in its specified position along most of its length, as shown in Fig. 3, the bead seat band may assume substantially the same position as it does when the assembly is properly assembled, as shown in Fig. 1. As pointed out above, it is widely recognized in the rim technology that this phenomena should be avoided.

There is illustrated in Fig. 4 a fragmentary radial cross-sectional view of another prior art rim assembly 39. The prior art rim assembly 39 of Fig. 4 is substantially the same as the prior art rim assembly 10 illustrated in Fig. 1, with the exceptions that it is designed to have a slightly different split lock ring 40 and has a circumferentially continuous lip 41 added at the first axial end 42 of the bead seat band 43 and second axial end (not shown) of the rim base 44. The purpose of the circumferential lip 41 is to eliminate the need for pry bar pockets in rims. Pry bar pockets are diametrically opposed pockets attached to an axial end of a rim base or bead seat band to facilitate the use of hydraulic or hand tools to unseat tire beads from the bead seat. Due to the presence of the circumferentially continuous lip 41, the radially inner surface 45 of a bead seat band of this particular prior art rim assembly has four portions rather than the three portions like the bead seat band of the prior art rim assembly illustrated in Fig. 1. The additional portion 46 of the radially inner surface of the bead seat band extends axially inwardly from the first axial end 42 of the bead seat band and is substantially cylindrical. This additional portion 46 is located radially outwardly of the radially outer surface 48 of the second portion of the lock ring. The axial length of this additional portion 46 of the radially inner surface of the bead seat band is dependent only upon the axial width of the circumferential continuous lip 41. Experiments have shown that a prior art rim assembly of the type illustrated in Fig. 4 does not prevent an airtight seal from being formed between the bead seat band 43 and the annular sealing member 47 when the entire lock ring is not in its specified position as described herein with respect to the prior art rim 10 illustrated in Fig. 1. In other words, the same undesirable phenomena described herein with respect to Fig. 2 and 3 may also occur with a prior art rim assembly of the type shown in Fig. 4.

Fig. 5 is a radial cross-sectional view of a rim assembly 50 made in accordance with the present invention in which the split lock ring is in its specified position, and Fig. 6 is an enlarged fragmentary radial cross-sectional view of the same rim assembly 50 at a location where the split lock ring is not in its specified position.

A rim assembly 50 manufactured in accordance with the present invention has four components: a rim base 51; a sealing member 52; a split lock ring 53; and a bead seat band 54.

The cylindrical rim base 50 has first 55 and second 56 axial ends and a pair of annular grooves 57, 58 in the outer circumferential surface 59 of the rim base neasr the first axial end 55 of the rim base. A rim base made in accordance with the invention is similar enough to a prior art rim base of the type shown in Fig. 1, that a pneumatic tire that is mountable upon a prior art rim assembly could also be mounted upon a correspondingly sized rim assembly made in accordance with the invention. The rim base 51 has a bead seat 60 extending axially inwardly from its second axial end 56, and a flange 61 extending radially outwardly from the second axial end of the rim base. The bead seat may be inclined with respect to the axis of rotation of the rim assembly.

A first portion of an annular sealing member 52, such as an elastometric "O" ring, is located in the annular groove 57 that is furthest away from the first axial end 55 of the rim base 51. A second portion of the sealing member extends radially outwardly of the outer circumferential surface 59 of the rim base.

A split lock ring 53 has a specified position such that a first portion 62 of the lock ring is located in the annular groove 58 that is closest to the first axial end 55 of the rim base. A second portion 63 of the lock ring extends radially outwardly of the outer circumferential surface 59 of the rim base and axially outwardly of the annular groove 58 that is closest to the first axial end of the rim base. The second portion of the lock ring has an axially inner surface 64 for engaging the bead seat band, and a radially outermost surface 65. The axially inner surface 64 of the second portion of the lock ring should be complementary to the second portion 70 of the radially inner surface of the bead seat band 54. The radially outermost surface of the second portion of the split lock ring has a predetermined radius r when the lock ring is in its specified position. If the lock ring has been damaged or has not been properly located in the annular groove along its entire length, then the radially outermost surface of the second portion of the split lock ring will be located radially outward of the predetermined radius r at some location, as shown in Fig. 6.

A cylindrical bead seat band 54 has first 66 and second 67 axial ends and radially inner 68 and outer 69 surfaces. The bead seat band is coaxial with, and slidably mounted about the rim base, such that the first axial end 66 of the bead seat band is nearer the first axial end 55 of the rim base than the second axial end 67 of the bead seat band. While the radially inner surface of the bead seat band of the prior art rim assembly, shown in Fig. 1, has three portions, the radially inner surface of a bead seat band in accordance with the invention comprises four distinct portions.

The first portion 70 of the radially inner surface of the bead seat band extends axially inwardly from the first axial end 66 of the bead seat band and has a predetermined axial length. The first portion is cylindrical and has a radius R that is slightly larger than the predetermined radius r of the radially outermost surface 65 of the second portion of the split lock ring. It is preferable that the radius R of the first portion of the radially inner surface of the bead seat band should be at least about 0.127 mm, larger than the predetermined radius r of the radially outermost surface of the second portion of the split lock ring to allow for manufacturing tolerances and surface blemishes in the split lock ring. As shown in Fig. 5, the first portion of the radially inner surface of the bead seat band is located radially outwardly of the radially outermost surface of the second portion of the split lock ring when the split lock ring is in its specified position.

The second portion 71 of the radially inner surface 68 of the bead seat band extends generally axially and radially inwardly from the axially inner end of the first portion 70 of this same surface, and has a contour that is complementary to the axially inner surface 64 of the second portion of the split lock ring 53. The second portion of the radially inner surface of the bead seat band is adjacent to and engages the axially inner surface of the second portion of the split lock ring when the lock ring is in its specified position.

The third portion 72 of the radially inner surface of the bead seat band 54 extends generally axially and radially inwardly from the axially inner end of the second portion 71 of the same surface to a minimum diameter that is only slightly larger than the diameter of the outer circumferential surface 59 of the rim base 51. The minimum radius of the inner surface of the bead seat band should be sufficiently larger than the diameter of the outer circumferential surface of the rim base to provide a sliding fit in accordance with accepted engineering practice. It is widely known that as long as the mating surfaces are clean and free of loose corrosion, a sliding fit is not an airtight fit. Therefore, it is necessary that the third portion of the radially inner surface of the bead seat band engage the sealing member 52 to form an airtight seal when the lock ring is in its specified position. The contour of the third portion may be a taper of constant or varying degrees, or may even be curved, and the axial length of the third portion is a function of the contour that is selected by the designer.

The fourth portion 73 of the radially inner surface of the bead seat band 54 extends axially inwardly from the axially inner end of the third portion 72 of the same surface to the second axial end 67 of the bead seat band. The fourth portion is cylindrical, and has a radius equal to the minimum radius of the third portion. A designer or engineer may elect to have an annular depression 74 in the fourth portion of the radially inner surface of the bead seat band to reduce the weight of the assembly, without deviating from the scope of the invention.

Referring still to Fig. 5, the radially outer surface 69 of a bead seat band 54 of a rim assembly according to the invention is similar to the bead seat band of a comparable size prior art rim assembly. The radially outer surface 69 of the bead seat band is inclined, with respect to the axis of rotation of the assembly, to the same degree as the bead seat 60 of the rim base. A flange 75 extends radially outwardly at the first axial end 66 of the rim base.

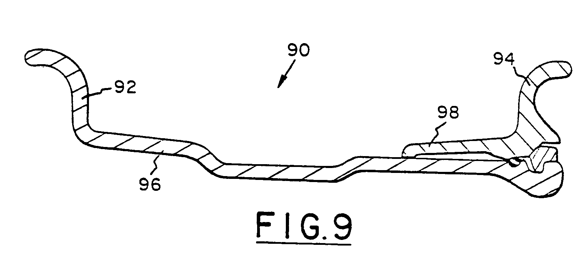

A rim assembly 50 according to the invention, as illustrated in Fig. 5, may have separate side-retaining flanges 76, 77 that are slidingly placed around the rim base and the bead seat band. However, it is understood that a rim assembly 90 according to the invention, as illustrated in Fig. 9, may have side-retaining flanges 92, 94 that are integral to the rim base 96 and bead seat band 98 without deviating from the scope of the invention.

Referring now to Fig. 6, there is shown an enlarged, fragmentary view of the rim assembly 50 of Fig. 5, with the split lock ring 53 displaced radially and axially outwardly from its specified position. The manner in which the split lock ring may be displaced is illustrated in Fig. 3, and has been discussed above. Since the split lock ring is displaced radially outwardly beyond both the radius r which the radially outermost surface of the split lock ring has when it is in its specified position, and the radius R of the first portion 70 of the radially inner surface of the bead seat band 54, the first axial end 66 of the bead seat band will contact the split lock ring if an attempt is made to inflate a tire (not shown) mounted on the rim assembly. Therefore, the third portion 72 of the radially inner surface of the bead seat band is unable to engage the sealing member 52 and form an airtight seal. In other words, in a rim assembly according to the invention the axial length of the first portion of the radially inner surface of the bead seat band is of such magnitude that if the first axial end of the bead seat band comes into contact with the lock ring, due to any part of the lock ring not being in its specified position, the third portion of the radially inner surface of the bead seat band will be unable to engage the sealing member and form an airtight seal when a tire is mounted upon the rim assembly and an attempt is made to inflate the tire.

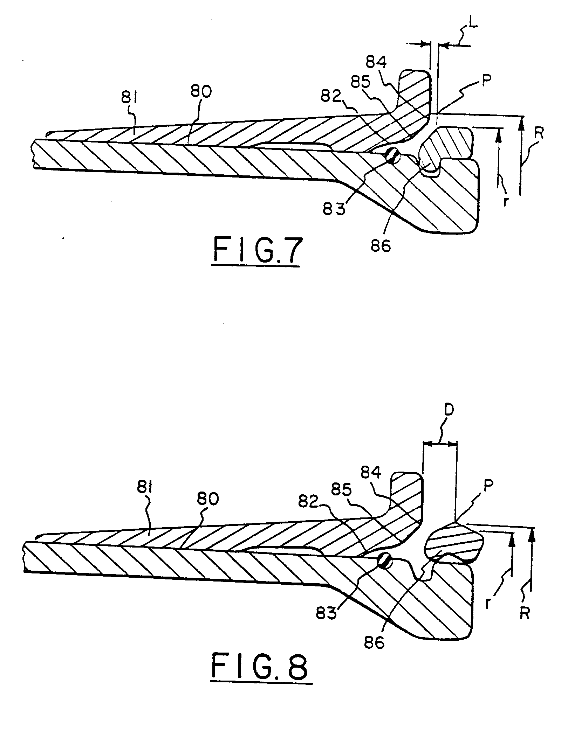

It has been found that the most expedient method of determining the axial length of the first portion of the radially inner surface of the bead seat band is to use radial cross-sectional templates of each component of the rim assembly made to a preselected scale, most preferably a 1-to-1 scale. Fig. 7 is an example of a template that may be referred to for understanding how the determination is made. While the template illustrated in Fig. 7 is a fragmentary view showing only a portion of the rim base, it is understood that the dimensions of a bead seat band according to the invention can be made with a template that represents the entire width of the rim base. The axial length of the first portion of the radially inner surface 80 of the band seat band 81 in accordance with the invention is at least as great as the axial distance L determined by sliding the bead seat band 81 axially inwardly with respect to the rim assembly so that the third portion 82 of the radially inner surface of the bead seat band does not contact the sealing member 83, then measuring the axial distance L from the axially outermost end 84 of the second portion 85 of the radially inner surface of the bead seat band to the axially innermost point P where the lock ring 86 intersects a cylinder that is coaxial with the assembly and has the same radius R as the first portion (not included in the template) of the radially inner surface of the bead seat band when the lock ring is displaced radially outwardly from its specified position.

Since, as illustrated in Fig. 6, the split lock ring may be displaced both radially and axially from its specified position, it is preferable that the axial length of the first portion of the radially inner surface of the bead seat band be greater than the length L determined by the procedure set forth in the preceding paragraph. The axial displacement of the split lock ring may be increased in those instances where the designer chooses to have the walls of the groove for the lock ring tapered at a low angle, such as in the prior art rim 39 illustrated in Fig. 4. Fig. 8 is another view of the same template shown in Fig. 7, and may be referred to for understanding how to determine the preferred axial length D of the first portion of the radially inner surface 80 of the bead seat band 81. Preferably, the axial length of the first portion of the radially inner surface 80 of the bead seat band 81 in accordance with the invention is at least as great as the axial distance D determined by sliding the bead seat band 81 axially inwardly, with respect to the rim assembly, so that the third portion 82 of the radially inner surface of the bead seat band does not contact the sealing member 83 then measuring the axial distance D from the axially outermost end 84 of the second portion 85 of the radially inner surface of the bead seat band to the axially outermost point P where the lock ring 86 intersects a cylinder that is coaxial inner surface 80 of the bead seat band 81 in accordance with the invention is at least as great as the axial distance D determined by sliding the bead seat band 81 axially inwardly, with respect to the rim assembly, so that the third portion 82 of the radially inner surface of the bead seat band does not contact the sealing member 83 then measuring the axial distance D from the axially outermost end 84 of the second portion 85 of the radially inner surface of the bead seat band to the axially outermost point P where the lock ring 86 intersects a cylinder that is coaxial with the assembly and has the same radius R as the first portion (not included in the template) of the radially inner surface of the bead seat band when the lock ring is displaced both radially and axially outwardly and twisted at the same time. This type of displacement, with twisting, of the lock ring is illustrated in Fig. 3.

The invention is most advantageously used in conjunction with a tubeless pneumatic tire because if the components of the rim assembly cannot form an airtight seal due to part of the lock ring not being in its specified position, the tubeless tire cannot be inflated. A tire requiring the use of an innertube may also be mounted on a rim assembly manufactured according to the invention, but the innertube could be inflated even though a part of the lock ring is not in its specified position.

**Claims**

1. A rim assembly (50) for mounting a pneumatic tire thereon, said rim assembly comprising
    (a) a cylindrical rim base (51) having first and second axial ends (55, 56) a pair of spaced apart annular grooves (57, 58) in an outer circumferential surface (59) of said rim base (51) near said first axial end (55), and a bead seat (60) on the rim base (51) near said second axial end (56)

(b) an annular sealing member (52), a first portion of said sealing member being located in the annular groove (59) that is furthest away from the first axial end (55) of said rim base and a second portion of said sealing member extending radially outwardly of the radially outer circumferential surface (59) of said rim base;

(c) a split lock ring (53), said lock ring having a specified position such that a first portion (62) of said lock ring is located in the annular groove (58) that is closest to the first axial end (55) of said rim base, a second portion (63) of said lock ring extending radially outwardly of said rim base (51) and axially outwardly of the annular groove that is closest to the first axial end of said rim base (55), said second portion (63) having an axially inner surface (64) for engaging a bead seat band (54) and a radially outermost surface (65) that has a predetermined radius (r) when the lock ring is in said specified position; and

(d) a generally cylindrical bead seat band (54) having first and second axial ends ( 66 ,67) and radially inner and outer surfaces (68 ,69) , said bead seat band being coaxial with and slidably mounted about said rim base (51) such that the first axial end (66) of the bead seat band is nearer the first axial end (55) of said rim base, the radially inner surface (68) of said bead seat band comprising:

(i) a first portion (70) that is cylindrical, said first portion having a radius (R) that is slightly larger than the predetermined radius (r) of the radially outermost surface (65) of the second portion (63) of said lock ring (53), said first portion (70) extending from the first axial end (66) of said bead seat band (54) for a predetermined axial length, said first portion (70) being located radially outwardly of the radially outermost surface (65) of the second portion of said lock ring (53) when said lock ring (53) is in said specified position;

(ii) a second portion (71) extending generally axially and radially inwardly from the axially inner end of said first portion (70) and having a contour that is complementary to the axially inner surface (64) of the second portion (63) of said lock ring (53) when said lock ring (53) is in said specified position;

(iii) a third portion (72) that is inclined generally axially and radially inwardly from the axially inner end of said second portion (71) to a minimum radius, said minimum radius being only slightly larger than the radius of the outer circumferential surface (59) of said rim base (51), said third portion (72) engaging said sealing member (52) to form an airtight seal when said lock ring is in said specified position; and

(iv) a fourth portion (73) extending axially inwardly from the axially inner end of said third portion (72), said fourth portion (73) being cylindrical and having said minimum radius;

the axial length of the first portion (70) of the radially inner surface (68) of said bead seat band (54) being of such magnitude that if the first axial end (66) of said bead seat band comes into contact with said lock ring (53), due to any part of said lock ring not being in said specified position, the third portion (72) of the radially inner surface (68) of said bead seat band will be unable to engage said sealing member (52) and form an airtight seal when a tire is mounted upon said rim assembly (51) and an attempt is made to inflate said tire.

2. A rim assembly as claimed in Claim 1, characterised in that the fourth portion (73) of said inner surface (68) may have a radially outwardly extending annular depression (74) therein in order to reduce the weight of the assembly.

3. A rim assembly as claimed in Claims 1 or Claim 2, further including side retaining flanges (76, 77) adjacent the axial sides of the rim, said side retaining flanges each being slideably mounted on the respective rim base (51) or bead seat band (54).

4. A method of determining the axial length of the first portion (70) of the radially inner surface (68) of the bead seat band (54) of a rim assembly as claimed in any one of Claims 1 to 3 , said method being characterised by sliding said bead seat band (54) (81) axially inwardly so that the third portion (72, 82) of the radially inner surface (68) of the base seat band does not contact the sealing member (52) (83) and then measuring the axial distance (L) from the axially outermost end (84) of said second portion (71) (85) of said bead seat band (54) (84) to the axially innermost point (P), where said lock ring (53) (86) intersects a cylinder that is coaxial with said assembly and having the same radius (R) as the radius of said first portion (70) of the radially inner surface of the bead seat band (54) when any part of said lock ring (53) is displaced radially outwardly from said specified position, the axial length of the first portion (70) of the radially inner surface of the bead seat band (54) (81) being at least as great as said axial distance (L) determined above.

5. A method of determining the axial length of the first portion (70) of the radially inner surface (68) of the bead seat band (54) of the rim assembly as claimed in any one of Claims 1 to 3, said method being characterised by the axial length of said first portion (70) of said bead seat band (54) (81) being determined by sliding the bead seat band (54) (81) axially inwardly so that the third portion (72,82) of the radially inner surface (68) of the bead seat band (54) does not contact the sealing member (52) (83) and then measuring the axial distance (D) from the axially outermost end (84) of the second portion (71) (85) of the radially inner surface of the bead seat band, to the axially outermost point (P) where the lock ring (53) (86) intersects a cylinder of radius (R) which is coaxial with the assembly and has the same radius R as the radius of said first portion (70) of the radially inner surface (68) of the bead seat band, when the lock ring is displaced both radially and axially outwardly and twisted at the same time, said axial length being at least as great as said axial distance 'D'.

6. A rim assembly according to any one of Claims 1 to 3 characterised in that said first portion (70) of the bead seat band has an axial length which is determined by a method as claimed in Claim 4 or Claim 5.

**Patentansprüche**

1. Radfelge (50), auf der ein Luftreifen montiert werden kann, aus:
   (a) einer zylindrischen Grundfelge (51), mit einem ersten und zweiten axialen Ende (55, 56), zwei in einem gewissen Abstand voneinander angeordneten Ringnuten (57, 58) in einer äußeren Umfangsfläche (59) der Grundfelge (51) nahe bei dem ersten axialen Ende (55), und einer Wulstauflage (60) auf der Grundfelge (51) nahe bei dem zweiten axialen Ende (56):
   (b) einer Ringdichtung (52), wobei ein erster Teil dieser Ringdichtung in der am weitesten von dem ersten axialen Ende (55) der Grundfelge entfernten Ringnut (57) angeordnet ist, und ein zweiter Teil dieser Ringdichtung sich bezüglich der radial äußeren Umfangsfläche (59) der Grundfelge radial nach außen erstreckt;
   (c) einem geteilten Verriegelungsring (53), der in einer vorgeschriebenen Position ist, in der ein erster Teil (62) dieses Verriegelungsrings in der am nächsten bei dem ersten axialen Ende (55) der Grundfelge gelegenen Ringnut (58) angeordnet ist, und ein zweiter Teil (63) des Verriegelungsrings sich von der Grundfelge (51) radial nach außen und von der am nächsten bei dem ersten axialen Ende (55) der Grundfelge (51) gelegenen Ringnut (58) axial nach außen erstreckt, wobei der zweite Teil (63) eine axial innere Oberfläche (64) aufweist, an der ein Wulstauflageband (54) anliegt, und eine radial äußerste Oberfläche (65) aufweist, die einen vorgegebenen Radius (r) aufweist, wenn der Verriegelungsring in der vorgeschriebenen Position ist; und
   (d) einem im allgemeinen zylindrischen Wulstauflageband (54), mit einem ersten und zweiten axialen Ende (66, 67), und einer radial inneren und äußeren Oberfläche (68, 69), wobei dieses Wulstauflageband koaxial zu der Grundfelge (51) angeordnet ist und auf der Grundfelge (51) verschiebbar angebracht ist, wobei das erste axiale Ende (66) des Wulstauflagebandes näher bei dem ersten axialen Ende (55) der Grundfelge gelegen ist, und wobei die radial innere Oberfläche (68) des Wulstauflagebandes aufweist:
      (i) einen ersten Teil (70), der zylindrisch ist und einen Radius (R) hat, der geringfügig größer als der vorgegebene Radius (r) der radial äußersten Oberfläche (65) des zweiten Teils (63) des Verriegelungsrings (53) ist, wobei sich der erste Teil (70) von dem ersten axialen Ende (66) des Wulstauflagebandes (54) um eine vorgegebene Länge in axialer Richtung erstreckt, und wobei der erste Teil (70) radial außerhalb der radial äußersten Oberfläche (65) des zweiten Teils des Verriegelungsrings (53) gelegen ist, wenn der Verriegelungsring in der vorgeschriebenen Position ist;
      (ii) einen zweiten Teil (71), der sich ab dem axial inneren Ende des ersten Teils (70) im allgemeinen axial und radial nach innen erstreckt, und einen Umriß aufweist, der komplementär zu der axial inneren Oberfläche (64) des zweiten Teils (63) des Verriegelungsrings (53) ist, wenn der Verriegelungsring (53) in der vorgeschriebenen Position ist;
      (iii) einen dritten Teil (72), der sich ab dem axial inneren Ende des zweiten Teils (71) im allgemeinen axial und radial nach innen erstreckt bis zu einem minimalen Radius, wobei dieser minimale Radius nur geringfügig größer als der Radius des äußeren Umfangsoberfläche (59) der Grundfelge (51) ist, und wobei der dritte Teil (72) an der Ringdichtung (52) anliegt, um eine luftdichte Abdichtung zu bilden, wenn der Verriegelungsring in der vorgeschriebenen Position ist; und

(iv) einen vierten Teil (73) der sich ab dem axial inneren Ende des dritten Teils (72) axial nach innen erstreckt, wobei dieser vierte Teil (73) zylindrisch ist und diesen minimalen Radius aufweist;

wobei die axiale Länge des ersten Teils (70) der radial inneren Oberfläche (68) des Wulstauflagebandes (54) eine solche Größe hat, daß dann, wenn das erste axiale Ende (66) des Wulstauflagebandes in Kontakt mit dem Verriegelungsring (53) kommt, weil ein Teil des Verriegelungsrings nicht in der vorgeschriebenen Position ist, der dritte Teil (72) der radial inneren Oberfläche (68) des Wulstauflagebandes nicht mehr in der Lage ist, an der Ringdichtung (52) anzuliegen und eine luftdichte Abdichtung zu bilden, wenn ein Reifen auf der Radfelge (50) montiert ist und versucht wird, diesen Reifen aufzupumpen.

2. Radfelge gemäß Anspruch 1, dadurch gekennzeichnet, daß der vierte Teil (73) der inneren Oberfläche (68) eine sich radial nach außen erstreckende ringförmige Vertiefung (74) haben kann, um das Gewicht der Radfelge zu verringern.

3. Radfelge gemäß Anspruch 1 oder 2, dadurch gekennzeichnet, daß sie außerdem Seitenhalteflansche (76, 77) aufweist, die an die axialen Seiten der Grundfelge angrenzen, wobei diese Seitenhalteflansche auf der Grundfelge bzw. dem Wulstauflageband (54) verschiebbar angebracht sind.

4. Verfahren zur Bestimmung der axialen Länge des ersten Teils (70) der radial inneren Oberfläche (68) des Wulstauflagebandes (54) einer Radfelge gemäß irgendeinem der Ansprüche 1 bis 3, dadurch gekennzeichnet, daß das Wulstauflageband (54) (81) axial nach innen geschoben wird, bis der dritte Teil (72, 82) der radial inneren Oberfläche (68) des Wulstauflagebandes die Ringdichtung (52), (83) nicht mehr berührt, und dann die axiale Entfernung (L) gemessen wird zwischen dem axial äußersten Ende (84) des zweiten Teils (71) (85) des Wulstauflagebandes (54) (84) und dem axial innersten Punkt (P), bei dem der Verriegelungsring (53) (86) einen Zylinder schneidet, der koaxial zu der Radfelge ist und den gleichen Radius (R) wie der erste Teil (70) der radial inneren Oberfläche des Wulstauflagebandes (54) hat, wenn irgendein Teil des Verriegelungsrings (53) von dieser vorgeschriebenen Position radial nach außen verschoben wird, wobei die axiale Länge des ersten Teils (70) der radial inneren Oberfläche des Wulstauflagebandes (54) (81) mindestens so groß ist wie die oben bestimmte axiale Entfernung (L).

5. Verfahren zur Bestimmung der axialen Länge des ersten Teils (70) der radial inneren Oberfläche (68) des Wulstauflagebandes (54) der Radfelge gemäß irgendeinem der Ansprüche 1 bis 3, dadurch gekennzeichnet, daß das Wulstauflageband (54) (81) axial nach innen geschoben wird, bis der dritte Teil (72) (82) der radial inneren Oberfläche (68) des Wulstauflagebandes (54) nicht mehr die Ringdichtung (52, 83) berührt, und dann die axiale Entfernung (D) gemessen wird zwischen dem axial äußersten Ende (84) des zweiten Teils (71) (85) der radial inneren Oberfläche des Wulstauflagebandes und dem axial äußersten Punkt (P), bei dem der Verriegelungsring (53) (86) einen Zylinder mit dem Radius (R) schneidet, der koaxial zu der Radfelge ist und den gleichen Radius R hat wie der erste Teil (70) der radial inneren Oberfläche (68) des Wulstauflagebandes, wenn der Verriegelungsring sowohl radial, als auch axial nach außen verschoben wird und gleichzeitig verdreht wird, wobei die axiale Länge mindestens so groß ist wie die axiale Entfernung (D).

6. Radfelge gemäß irgendeinem der Ansprüche 1 bis 3, dadurch gekennzeichnet, daß der erste Teil (70) des Wulstauflagebandes eine axiale Länge aufweist, die nach einem Verfahren gemäß Anspruch 4 oder Anspruch 5 bestimmt wird.

**Revendications**

1. Un ensemble de jante (50), sur lequel un pneumatique peut être monté, ledit ensemble de jante comportant

(a) une base de jante cylindrique (51) possédant des première et deuxième extrémités axiales (55, 56), un couple de gorges annulaires espacées (57, 58) dans une surface circonférentielle extérieure (59) de ladite base de jante (51) près de ladite première extrémité axiale (55) et une bande d'assise du pneumatique (60) sur la base de jante (51) près de ladite deuxième extrémité axiale (56);

(b) un élément d'étanchéité annulaire (52), une première partie du dit élément d'étanchéité étant situé dans la gorge annulaire (59) la plus éloignée de la première extrémité axiale (55) de ladite base de jante et une deuxième partie du dit élément d'étanchéité s'étendant radialement vers l'extérieur de la surface circonférentielle radialement extérieure (59) de ladite base de jante;

(c) un anneau de verrouillage fendu (53), ledit anneau de verrouillage possédant une position spécifiée telle qu'une première partie (62) du dit anneau de verrouillage se situe dans la gorge annulaire (58) la plus proche de la première extrémité axiale (55) de ladite base de jante, une deuxième partie (63) du dit anneau de verrouillage s'étendant radialement vers l'extérieur de ladite base de jante (51) et axialement vers l'extérieur de la gorge annulaire (58) la plus proche de la première extrémité axiale (55) de ladite base de jante (51), ladite deuxième partie (63) ayant une surface axialement intérieure (64) pour venir en contact avec une bande d'assise du pneumatique (54) et une surface située radialement la plus à l'extérieur (65) possédant un rayon prédéterminé (r) lorsque l'anneau de verrouillage se trouve dans ladite position spécifiée; et

(d) une bande d'assise du pneumatique généralement cylindrique (54) possédant des première et deuxième extrémités axiales (66, 67) ainsi que des surfaces radialement intérieure et extérieure (68, 69), ladite bande d'assise du pneumatique étant coaxiale par rapport à ladite base de jante (51) et étant montée sur celle-ci de manière à pouvoir y glisser, de sorte que la première extrémité axiale (66) de la bande d'assise du pneumatique est plus proche de la première extrémité axiale (55) de ladite base de jante, la surface radialement intérieure (68) de ladite bande d'assise du pneumatique comportant:

    (i) une première partie (70) cylindrique, ladite première partie ayant un rayon (R) légèrement supérieur au rayon prédéterminé (r) de la surface située radialement la plus à l'extérieur (65) de la deuxième partie (63) du dit anneau de verrouillage (53), ladite première partie (70) s'étendant à partir de la première extrémité axiale (66) de ladite bande d'assise du pneumatique (54) sur une longueur axiale prédéterminée, ladite première partie (70) étant située radialement vers l'extérieur de la surface située radialement la plus à l'extérieur (65) de la deuxième partie du dit anneau de verrouillage (53) lorsque ledit anneau de verrouillage (53) se trouve dans ladite position spécifiée;

    (ii) une deuxième partie (71) s'étendant généralement axialement et radialement vers l'intérieur, à partir de l'extrémité axialement intérieure de ladite première partie (70) et ayant un contour complémentaire de la surface axialement intérieure (64) de la deuxième partie (63) du dit anneau de verrouillage (53) lorsque ledit anneau de verrouillage (53) se trouve dans ladite position spécifiée;

    (iii) une troisième partie (72) inclinée généralement axialement et radialement vers l'intérieur, à partir de l'extrémité axialement intérieure de ladite deuxième partie (71) jusqu'à une partie de rayon minimal, ledit rayon minimal n'étant que légèrement supérieur au rayon de la surface circonférentielle extérieure (59) de ladite base de jante (51), ladite troisième partie (72) venant en contact avec ledit élément d'étanchéité (52) pour établir une étanchéité à l'air lorsque ledit anneau de verrouillage se trouve dans ladite position spécifiée; et (iv) une quatrième partie (73) s'étendant axialement vers l'intérieur à partir de l'extrémité axialement intérieure de ladite troisième partie (72), ladite quatrième partie (73) étant cylindrique et possédant ledit rayon minimal;

       la longueur axiale de la première partie (70) de la surface radialement intérieure (68) de ladite bande d'assise du pneumatique (54) ayant une valeur telle que si la première extrémité axiale (66) de ladite bande d'assise du pneumatique vient en contact avec ledit anneau de verrouillage (53) parce qu'une partie quelconque du dit anneau de verrouillage ne se trouve pas dans ladite position spécifiée, la troisième partie (72) de la surface radialement intérieure (68) de ladite bande d'assise du pneumatique est incapable de venir en contact avec ledit élément d'étanchéité (52) et d'établir une étanchéité à l'air lorsqu'un pneumatique est monté sur ledit ensemble de jante (50) et que l'on essaie de gonfler ledit pneumatique.

**2.** Un ensemble de jante selon la revendication 1, caractérisé en ce que la quatrième partie (73) de ladite surface intérieure (68) peut comporter un renfoncement annulaire s'étendant radialement vers l'extérieur (74), servant à réduire le poids de l'ensemble.

**3.** Un ensemble de jante selon les revendications 1 ou 2, comportant en outre des brides latérales de retenue (76, 77), adjacentes aux côtés axiaux de la jante, lesdites brides latérales de retenue étant montées, de façon à pouvoir glisser, respectivement sur la base de jante (51) ou sur la bande d'assise du pneumatique (54).

4. Un procédé pour déterminer la longueur axiale de la première partie (70) de la surface radialement intérieure (68) de la bande d'assise du pneumatique (54) d'un ensemble de jante selon l'une quelconque des revendications 1 à 3, ledit procédé étant caractérisé en ce qu'il consiste à faire glisser ladite bande d'assise du pneumatique (54) (81) axialement vers l'intérieur, de sorte que la troisième partie (72, 82) de la surface radialement intérieure (68) de la bande d'assise du pneumatique ne vient pas en contact avec l'élément d'étanchéité (52) (83), et à mesurer ensuite la distance axiale (L) entre l'extrémité, située axialement la plus à l'extérieur (84) de ladite deuxième partie (71) (85) de ladite bande d'assise du pneumatique (54) (84) et le point situé axialement le plus à l'intérieur (P), où ledit anneau de verrouillage (53) (86) recoupe un cylindre qui est coaxial par rapport au dit ensemble et possède le même rayon (R) que celui de ladite première partie (70) de la surface radialement intérieure de la bande d'assise du pneumatique (54) lorsqu'une partie quelconque du dit anneau de verrouillage (53) est déplacée radialement vers l'extérieur à partir de ladite position spécifiée, la longueur axiale de la première partie (70) de la surface radialement intérieure de la bande d'assise du pneumatique (54) (81) étant au moins égale à ladite distance axiale (L) déterminée ci-dessus.

5. Un procédé pour déterminer la longueur axiale de la première partie (70) de la surface radialement intérieure (68) de la bande d'assise du pneumatique (54) de l'ensemble de jante, selon l'une quelconque des revendications 1 à 3, ledit procédé étant caractérisé en ce qu'on détermine la longueur axiale de ladite première partie (70) de ladite bande d'assise du pneumatique (54) (81) en faisant glisser axialement vers l'intérieur la bande d'assise du pneumatique (54) (81), de sorte que la troisième partie (72, 82) de la surface radialement intérieure (68) de la bande d'assise du pneumatique (54) ne vient pas en contact avec l'élément d'étanchéité (52) (83) et en ce qu'on mesure ensuite la distance axiale (D) entre l'extrémité située axialement la plus à l'extérieur (84) de la deuxième partie (71) (85) de la surface radialement intérieure de la bande d'assise du pneumatique et le point situé axialement le plus à l'extérieur (P) où l'anneau de verrouillage (53) (86) recoupe un cylindre de rayon (R), qui est coaxial par rapport à l'ensemble et qui possède la même rayon R que celui de la première partie (70) de la surface radialement intérieure (68) de la bande d'assise du pneumatique, lorsqu'on déplace l'anneau de verrouillage à la fois radialement et axialement vers l'extérieur et qu'on le fait tourner simultanément, ladite longueur axiale étant au moins égale à ladite distance axiale (D).

6. Un ensemble de jante selon l'une quelconque des revendications 1 à 3, caractérisé en ce que ladite première partie (70) de la bande d'assise du pneumatique a une longueur axiale déterminée au moyen d'un procédé selon les revendications 4 ou 5.

**FIG.1**
*PRIOR ART*

**FIG.5**

FIG.2

PRIOR ART

FIG.4

PRIOR ART

FIG.6

FIG.3

FIG.7

FIG.8

90

94

92

98

96

## FIG.9